Europäisches Patentamt

European Patent Office

Office européen des brevets

(11) Veröffentlichungsnummer: **0 483 637 A2**

## EUROPÄISCHE PATENTANMELDUNG

(21) Anmeldenummer: **91117944.8**

(51) Int. Cl.[5]: **F16G 3/16**

(22) Anmeldetag: **22.10.91**

(30) Priorität: **29.10.90 DE 4034322**
**31.01.91 DE 4102851**
**11.06.91 DE 4119139**

(43) Veröffentlichungstag der Anmeldung:
**06.05.92 Patentblatt 92/19**

(84) Benannte Vertragsstaaten:
**DE ES FR GB**

(71) Anmelder: **MATO Maschinen- und Metallwarenfabrik Curt Matthaei GmbH & Co KG**
**Bieberer Strasse 215-217**
**W-6050 Offenbach am Main(DE)**

(72) Erfinder: **Herold, Wolfgang**
**Engelsgässchen 15**
**W-6050 Offenbach am Main(DE)**

(74) Vertreter: **Schieferdecker, Lutz, Dipl.-Ing.**
**Herrnstrasse 37**
**W-6050 Offenbach am Main(DE)**

(54) **Verfahren und Vorrichtung zum Verbinden von Förderbandenden.**

(57) Die Erfindung betrifft ein Verfahren und eine Vorrichtung zum Verbinden von Förderbandenden und zum Reparieren von Rissen in Förderbändern mit Hilfe von plattenförmigen bzw. länglichen Verbindungselementen, die Durchtrittsöffnungen für Befestigungselemente aufweisen.

Der Kern der Erfindung besteht darin, daß ein Oberwerkzeug (12, 12a, 12b) zum Positionieren von mindestens einem oberen Verbindungselement (3) dient und daß ein Unterwerkzeug (13, 13a, 13b) zum Positionieren von mindestens einem unteren Verbindungselement (4) dient, und daß das Oberwerkzeug (12, 12a, 12b) und das Unterwerkzeug (13, 13a, 13b) zum Eintreiben von Krampen (8) aufgrund von Hammerschlägen vorgesehen sind.

Fig. 1

EP 0 483 637 A2

Die Erfindung betrifft ein Verfahren und eine Vorrichtung zum Verbinden von Förderbandenden und zum Reparieren von Rissen in Förderbändern mit Hilfe von plattenförmigen bzw. länglichen Verbindungselementen, die Durchtrittsöffnungen für Befestigungselemente aufweisen. Diese Befestigungselemente sind nach dem Stand der Technik Schrauben oder Nieten.

Die Nieten bzw. Schrauben erfordern große Durchtrittsöffnungen in den plattenförmigen Verbindungselementen und auch große Durchtrittsquerschnitte im Förderband selbst. Dies führt im Ergebnis zu einer nennenswerten Schwächung des Förderbandes im Bereich der Verbindungsstelle. Ferner ist der Aufwand, den die Herstellung einer derartigen Verbindung mit sich bringt, in der Regel außerordentlich groß und zumeist auch von der Verfügbarkeit von Hilfsgeräten mit Antrieben abhängig. Vor allem das Fehlen von Hilfsgeräten und/oder von geeigneten Kraftanschlüssen steht der Anwendung des bekannten Verfahrens in vielen Fällen entgegen.

Die Erfindung bezweckt daher, ein Verfahren und eine Vorrichtung zu schaffen, mit deren Hilfe es auf einfache und unkomplizierte Weise ohne Zuhilfenahme von Hilfsantrieben möglich ist, Förderbandenden miteinander zu verbinden bzw. Risse in Förderbändern zu reparieren.

Zur Lösung dieses Problems sieht die Erfindung vor,

a) daß zunächst die Verbindungselemente mit eingesetzten Krampen an der einen, ersten Seite der Förderbandenden bzw. des Förderbandes sowie die stumpf aneinanderstoßenden Förderbandenden und/oder den Riß im Förderband übergreifend angeordnet werden,

b) daß die Förderbandenden und/oder das Förderband sodann derart auf die Spitzen der Krampen und/oder die Krampen mit ihren Spitzen derart auf die Förderbandenden/das Förderband gedrückt werden, daß die Krampen schrittweise durch die Verbindungselemente auf der ersten Seite und durch die Förderbandenden bzw. durch das Förderband hindurchtreten,

c) daß die Krampen daraufhin mit ihren Spitzen und ihren freien Schenkeln in mit fluchtenden Durchtrittsöffnungen versehene Verbindungselemente auf der zweiten Seite der Förderbandenden/des Förderbandes getrieben werden und

d) daß die Krampen sodann vollständig durch die Förderbandenden/durch das Förderband und die Verbindungselemente getrieben und

e) schließlich umgelegt bzw. umgebogen werden.

Die Verwendung von Krampen mit ihrem verhältnismäßig geringen Materialquerschnitt erlaubt ein Arbeiten, ohne daß Hilfsgeräte mit einem Antrieb vorhanden sein müssen. Es reicht, wenn die Krampen mit Hilfe einer Vorrichtung zum Halten und Führen sowie unter Verwendung eines Hammers durch die Verbindungselemente und durch die Förderbandenden getrieben werden. Der geringe Materialquerschnitt der Krampen setzt dem Eintreiben nur einen geringen Widerstand entgegen und führt ferner dazu, daß die Durchtrittsöffnungen in den Verbindungselementen wesentlich kleiner sein können und daß auch die Förderbandenden durch die hindurchtretenden Krampenschenkel weniger geschwächt werden als bei der Verwendung von Schrauben oder Nieten. Die Verwendung von Krampen ist in diesem Zusammenhang sogar dann vorteilhafter, wenn sie in geringerem Abstand und in größerer Anzahl bezogen auf die Länge der Verbindungsstelle eingesetzt werden als dies bei der Verwendung von Schrauben oder Nieten üblich war.

Die Durchführung des Verfahrens erfolgt unter Verwendung eines Hilfsgerätes bzw. unter Verwendung einer Vorrichtung, die ein Oberwerkzeug und ein Unterwerkzeug umfaßt, die an einem Werkzeugträger fluchtend sowie frei vorstehend bzw. auskragend angeordnet sind. Das Oberwerkzeug und das Unterwerkzeug dienen zum Halten der länglichen, die Stoßstelle oder den Riß übergreifenden Verbindungselemente. Ferner dienen sie zur Führung von an den Krampen angreifenden Druckstücken, welche beim Eintreiben der Krampen die Hammerschläge auf die Krampen übertragen.

Weitere Merkmale der Erfindung gehen aus der Beschreibung und den Unteransprüchen im Zusammenhang mit der Zeichnung hervor.

Die Erfindung wird nachstehend anhand von Ausführungsbeispielen, die in der Zeichnung dargestellt sind, näher beschrieben. Dabei zeigen:

Fig. 1: eine Seitenansicht der Vorrichtung zum Teil im Schnitt;

Fig. 2: einen Schnitt längs der Linie II-II in Fig. 1 in größerem Maßstab;

Fig. 3: einen Schnitt längs der Linie III-III in Fig. 1 in kleinerem Maßstab;

Fig. 4: einen Schnitt längs der Linie IV-IV in Fig. 1 in kleinerem Maßstab;

Fig. 5: in größerem Maßstab eine Seitenansicht einer abgewandelten Vorrichtung sowie zum Teil im Schnitt;

Fig. 6: einen Schnitt längs der Linie VI-VI in Fig. 5;

Fig. 7: einen Schnitt längs der Linie VII-VII in Fig. 5;

Fig. 8: einen Schnitt längs der Linie VIII-VIII in Fig. 5;

Fig. 9: in anderem Maßstab sowie im Schnitt eine weitere, abgewandelte Vorrichtung zum Befestigen von U-förmigen Verbindungselementen am einen Ende eines Förderbandes;

Fig. 10: in Seitenansicht sowie zum Teil im Schnitt eine weitere, abgewandelte Ausführungsform;

Fig. 11: einen Schnitt längs der Linie XI-XI in Fig. 10;

Fig. 12: einen abgebrochenen Schnitt längs der Linie XII-XII in Fig. 10;

Fig. 13: eine Draufsicht auf zwei bereits teilweise miteinander verbundene Förderbandenden in einer Zusatzeinrichtung zum Halten der Förderbandenden;

Fig. 14: einen Schnitt längs der Linie XIV-XIV in Fig. 13 in größerem Maßstab sowie mit der Vorrichtung gemäß Fig. 5 in einer Ansicht entsprechend dem Schnitt in Fig. 6 und

Fig. 15: einen Schnitt wie in Fig. 14, jedoch ohne die Vorrichtung gemäß Fig. 5 beim Umschlagen der freien Enden der Krampen.

Zum Verbinden von Förderbandenden 1 und 2 dienen längliche, plattenförmige Verbindungselemente 3 und 4, die die Stoßstelle 5 der Förderbandenden 1 und 2 auf verschiedenen Seiten 6 und 7 übergreifen und mit Hilfe von Krampen 8 an den Förderbandenden 1 und 2 sowie aneinander befestigt werden. Hierzu durchdringen die Krampen 8 Durchtrittsöffnungen 9 in den Verbindungselementen 3 und 4 sowie die Förderbandenden 1 und 2, ohne daß dort vorher Durchtrittsöffnungen angebracht werden. Das Eintreiben der Krampen 8 erfolgt mit Hilfe der verschiedenen, in den Figuren dargestellten Vorrichtungen sowie mit Hilfe von mindestens einem Hammer 10, der vorzugsweise ein rückschlagfreier Hammer ist.

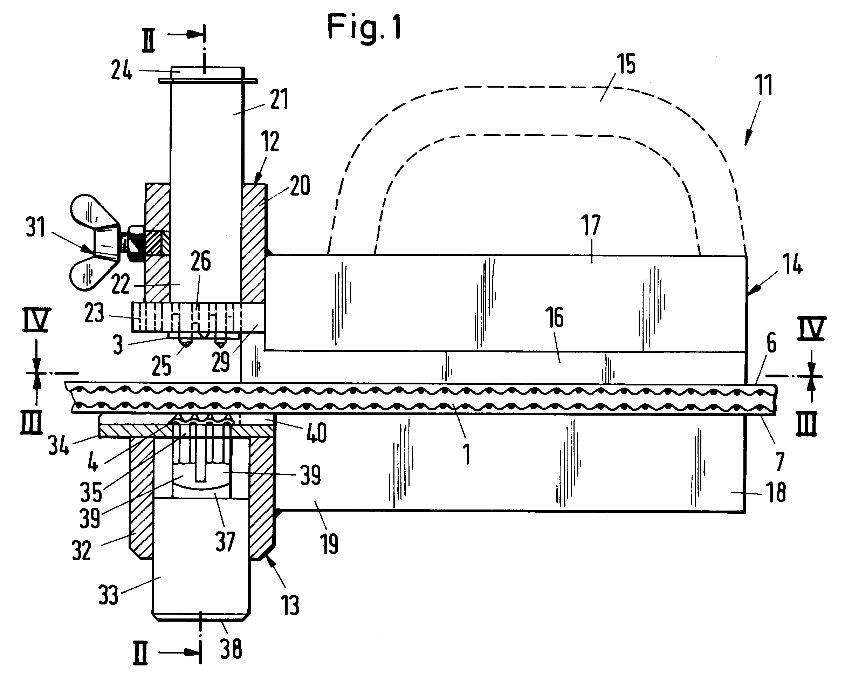

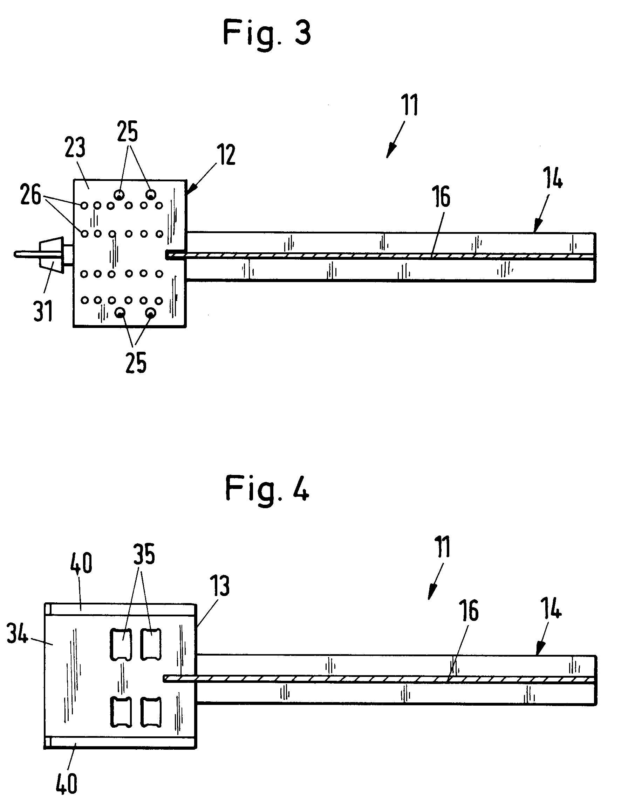

Die in den Figuren 1 bis 4 in verschiedenen Maßstäben dargestellte Vorrichtung 11 besteht aus einem Oberwerkzeug 12, einem Unterwerkzeug 13 und einem Werkzeugträger 14 mit einem Handgriff 14.

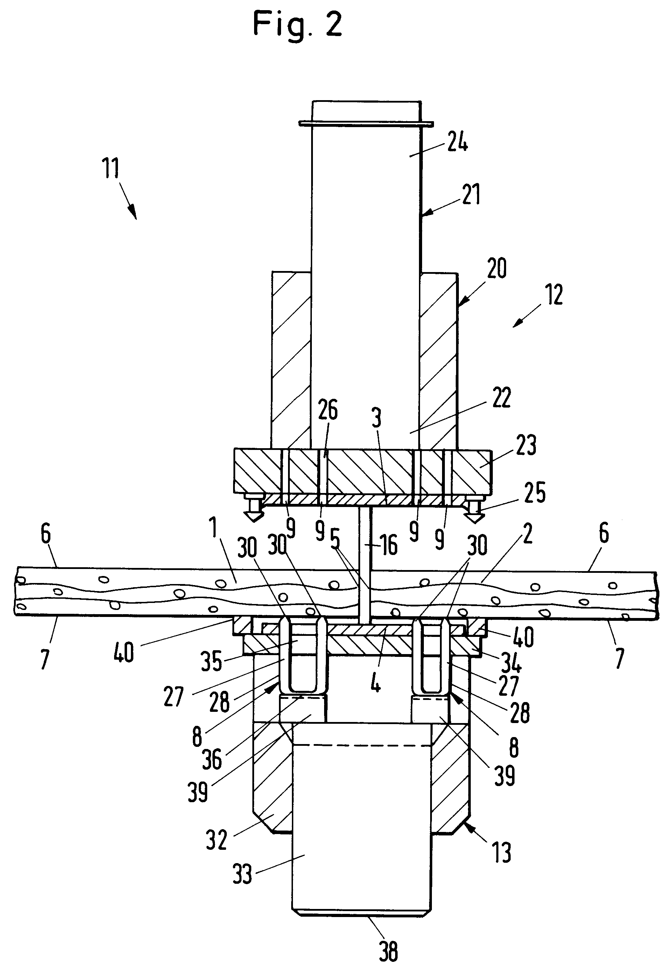

Der Werkzeugträger 14 besteht aus einem dünnwandigen Steg 16 und aus oberen Versteifungsteilen 17 sowie unteren Versteifungsteilen 18. Das Oberwerkzeug 12 und das Unterwerkzeug 13 sind am einen Ende 19 des Werkzeugträgers 14 im Abstand voneinander sowie starr derart angeordnet, daß sie sich auf verschiedenen Seiten 6 und 7 der Förderbandenden 1 und 2 befinden und die Stoßstellen 5 übergreifen, wenn die Förderbandenden 1 und 2 ferner mit ihren Stoßstellen 5 an ebenfalls verschiedenen Seiten des Steges 16 des Werkzeugträgers 14 anliegen. Diese Situation geht aus den beiden Figuren 1 und 2 hervor.

Das Oberwerkzeug 12 umfaßt eine Führungseinrichtung 20 z.B. in Gestalt einer Führungsbuchse für ein Druckstück 21 z.B. in Gestalt eines Bolzens. Das Druckstück 21 trägt an seinem einen, förderbandseitigen Ende 22 einen Halter 23 für das obere Verbindungselement 3 und ragt mit seinem anderen Ende 24 deutlich aus der Führungseinrichtung 20 heraus. Das bzw. auch mehrere Verbindungselemente 3 werden an dem Halter 23 z.B. mit Hilfe von Vorsprüngen 25 festgeklemmt.

Fluchtend mit den Durchtrittsöffnungen 9 in dem bzw. den Verbindungselementen 3 befinden sich auch Bohrungen 26 in dem Halter 23. Sie dienen beim Eintreiben der Krampen 8 zeitweilig zur Aufnahme der freien Enden 27 der Schenkel 28 der Krampen 8.

Der Halter 23 weist einen in den Figuren nicht dargestellten Schlitz in seinem werkzeugträgerseitigen Ende 29 auf und umgreift mit seinem Ende 29 ein Führungsblech, das zugleich von dem Steg 16 gebildet wird. Der Halter 23 ist somit gegen Verdrehen gesichert. Ferner wird hierdurch sichergestellt, daß die an der Unterseite des Halters 23 angeordneten Verbindungselemente 3 mit ihren Durchtrittsöffnungen 9 vom Druckstück 21 bzw. Bolzen fluchtend zu den Spitzen 30 der Krampen 8 geführt werden.

Schließlich weist das Oberwerkzeug 12 noch eine Einrichtung 31 oder Bremse zum Arretieren des Druckstückes 21 in der Führungseinrichtung 20 auf. Mit Hilfe der Einrichtung 31 wird der die oberen Verbindungselemente 3 tragende Halter 23 z.B. in der in den Figuren 1 und 2 dargestellten Stellung zum Einsetzen der Verbindungselemente 3 und während des Positionierens der Vorrichtung 11 arretiert. Ferner muß der Halter 23 mit seinen Verbindungselementen 3 in einer vollständig auf die Förderbandenden 1 und 2 abgesenkten Position arretiert werden, wenn die Krampen 8 eingeschlagen werden. Hierzu dient dann die Einrichtung 31 bzw. Bremse.

Das Unterwerkzeug 13 ist fluchtend zu dem Oberwerkzeug 12 am Werkzeugträger 14 angeordnet und umfaßt eine untere Führungseinrichtung 32, vorzugsweise in Gestalt einer Führungsbuchse und ein von ihr geführtes Druckstück 33, das vorzugsweise ebenfalls ein Bolzen ist. Am förderbandseitigen Ende der unteren Führungseinrichtung 32 befindet sich ein plattenförmiger Halter 34 und dient als Träger für das an der Unterseite 7 der Förderbandenden 1, 2 anzubringende Verbindungselement 4. Die in diese Verbindungselemente 4 bereits eingesetzten Krampen durchgreifen Öffnungen 35 in dem plattenförmigen Halter 34 und liegen mit ihrem Steg 36 (Fig. 2) an einem Zwischenstück oder Adapter 37 an. Der Adapter 37 ist mit dem Druckstück 33 verbunden oder ein Teil von diesem.

Die untere Führungseinrichtung 32 und der untere, plattenförmige Halter 34 sind starr mit dem Werkzeugträger 11 verbunden. Nur das bolzenförmige Druckstück 33 und der Adapter 37 sind längs der Führungseinrichtung 32 frei bewegbar, wobei das Druckstück 33 mit seinem unteren Ende 38 vor dem Einschlagen der Krampen 4 in die Förderbandenden 1 und 2 deutlich nach unten vorsteht. Dies gilt sowohl bezüglich der Führungseinrichtung 32 als auch des Werkzeugträgers 14.

Um eine Verbindung der beiden Förderbandenden 1 und 2 mit Hilfe der plattenförmigen Verbindungselemente 3 und 4 und der Krampen 8 mit Hilfe der Vorrichtung 11 herzustellen, werden das Oberwerkzeug 12 und das Unterwerkzeug 13 zunächst gemäß den Figuren 1 und 2 so angeordnet, daß die Verbindungselemente 3 und 4 die freien Stirnflächen der Förderbandenden 1 und 2 überbrücken. Sodann wird das obere Druckstück 21 mit seinem Halter 23 und dem bzw. den dort befindlichen Verbindungselementen 3 bis zur Auflage auf der oberen Seite 6 der Förderbandenden 1 und 2 abgesenkt. Daraufhin wird der Halter 23 in der abgesenkten Stellung mit Hilfe der Einrichtung 31 arretiert. Sodann werden die Krampen 8 mit Hilfe von Hammerschlägen auf das freie Ende 24 des oberen Druckstückes 21 in die beiden Förderbandenden 1 und 2 hineingetrieben. Die Wirkung der Hammerschläge wird dabei von dem oberen Druckstück 21 über die anderen Teile der Vorrichtung 11 auf das untere Druckstück 33 übertragen, das längs der Führungseinrichtung 32 verschiebbar ist und sich beim Eintreiben der Krampen 8 auf einer starren Unterlage abstützt. Aufgrund der Hammerschläge schiebt das untere Druckstück 33 die Krampen 8 schrittweise von unten in die beiden Förderbandenden 1, 2 hinein, bis sie mit ihren Spitzen 30 aus der Seite 6 der Förderbandenden 1 und 2 heraus und sodann in die oberen Verbindungselemente 3 und schließlich in die Bohrungen 26 im Halter 23 eintreten. Wenn diese Situation erreicht ist, wird die Einrichtung 31 gelöst, so daß das obere Druckstück 21 mit dem Halter 23 von den freien Enden 27 der Schenkel 28 der Krampen 8 abgehoben werden kann. Daraufhin werden die oberen Verbindungselemente 3 vom Halter 3 gelöst, die Vorrichtung 11 wird verschoben und schließlich werden die freien Enden 27 der Schenkel 28 der Krampen 8 mit weiteren Hammerschlägen umgebogen.

Damit die Krampen 8 auch mit ihrem Steg 36 vollständig durch die Öffnungen 35 in dem plattenförmigen Halter 34 treten, weist das Zwischenstück 37 Vorsprünge 39 auf. Diese Vorsprünge 39 sind bis in die Öffnungen 35 verschiebbar, wenn sich die Führungseinrichtung 32 aufgrund der Hammerschläge über das Druckstück 33 nach unten verschiebt.

Zur Fixierung der unteren Verbindungselemente 4 an dem Halter 34 weist dieser seitliche Leisten 40 auf.

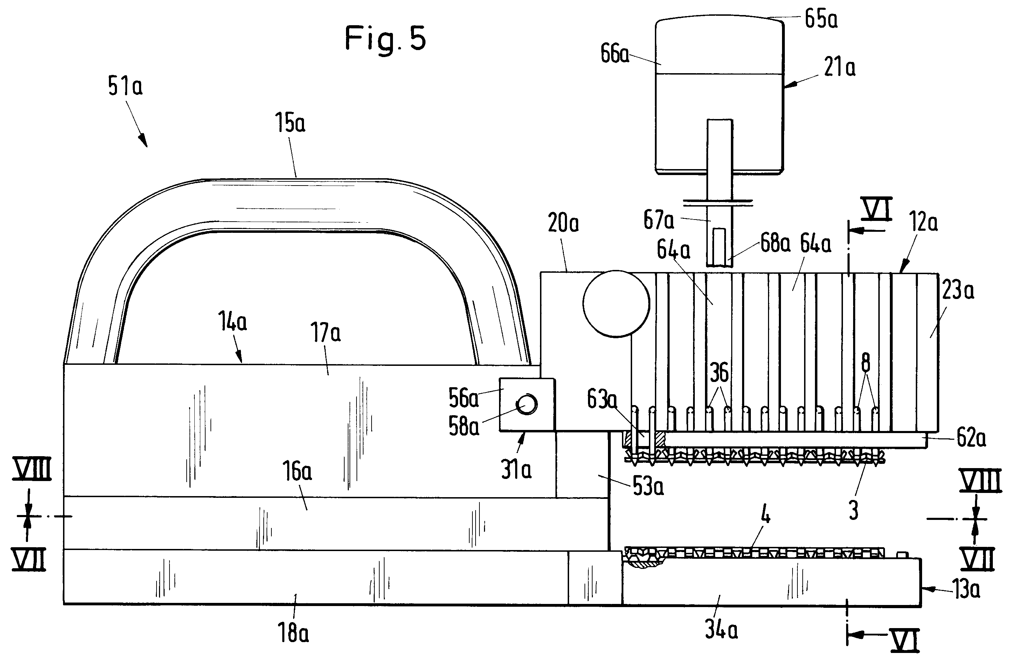

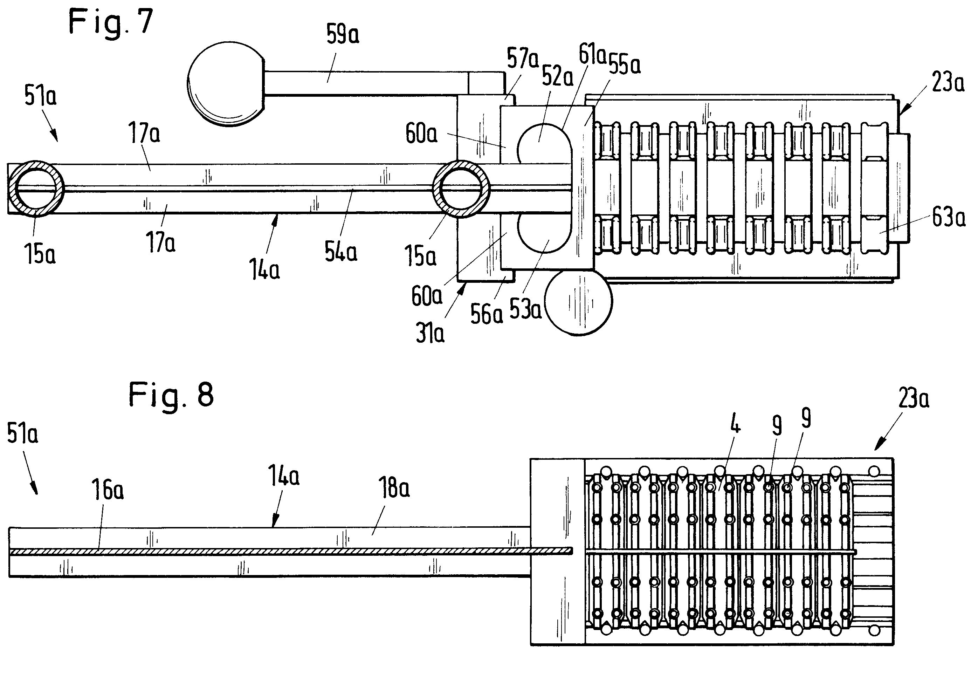

Bei der in den Figuren 5 bis 8 dargestellten Ausführungsform handelt es sich um eine abgewandelte Vorrichtung 51a, die aus weitgehend gleichartigen Teilen besteht. Diese Teile werden daher nachfolgend mit denselben Bezugszahlen und dem Index a bezeichnet.

Übereinstimmend weist die Vorrichtung 51a ein Oberwerkzeug 12a, ein Unterwerkzeug 13a und einen Werkzeugträger 14a mit einem Handgriff 15a auf. Ein sich horizontal erstreckender Steg 16a dient wiederum als Verbindung zwischen dem Unterwerkzeug 13a und dem Oberwerkzeug 12a.

Das Oberwerkzeug 12a umfaßt eine Führungseinrichtung 20a für einen Halter 23a. Der Halter 23a dient als Träger für vorzugsweise mehrere, z.B. für sieben obere Verbindungselemente 3, in die bereits Krampen 8 eingesetzt sind.

Ebenso wie der zum Oberwerkzeug 12 der Vorrichtung 11 gemäß den Figuren 1 bis 4 gehörende Halter 23 bezüglich seiner Lage zum Unterwerkzeug 13 verstellbar und in der jeweiligen Position arretierbar ist, gilt dies auch für den Halter 23a der Vorrichtung 51a.

Zur Führungseinrichtung 20a der Vorrichtung 51a gehören starr mit dem Werkzeugträger 14a verbundene Führungsstücke 52a und 53a, die sich in Führungsrichtung, d.h. also in Fig. 1 in vertikaler Richtung erstrecken. Die beiden Führungsstücke 52a und 53a sind im Querschnitt etwa halbkreisförmig und außen an den beiden oberen Versteifungsteilen 17a angeordnet, die ein den Steg 16a bildendes Stegblech 54a im oberen Bereich zu beiden Seiten flankieren. Ein Führungskörper 55a umgreift U- bzw. C-förmig sowie formschlüssig die beiden Führungsstücke 52a und 53a und trägt auf seiner dem Werkzeugträger 14a abgewandten Seite den Halter 23a oder ist mit diesem in einstückiger Weise ausgebildet. Durch Verschieben des Führungskörpers 55a längs der Führungsstücke 52a und 53a wird entsprechend der Halter 23a angehoben oder abgesenkt.

Am Werkzeugträger 14a ist ferner eine Einrichtung 31a zum Arretieren des Führungskörpers 55a und somit des Halters 23a vorgesehen. Sie umfaßt zwei Backen 56a und 57a, die außen an dem Führungskörper 55a anliegen und am Werkzeugträger 14a mit Hilfe einer Achse 58a (Fig. 5) gehalten sind und mit Hilfe eines Handhebels 59a und eines in den Figuren nicht dargestellten Gewindes auf der Achse 58a bzw. am einen Backen 56a oder 57a gegen den Führungskörper 55a gedrückt werden. Der die Führungsstücke 52a und 53a bereits formschlüssig umgreifende Führungskörper 55a wird beim Festziehen der Bremse bzw. der Einrichtung zum Arretieren 31a zusätzlich kraftschlüssig auf die Führungsstücke 52a und 53a und/oder mit seinen freien Rändern 60a außen auf die oberen Versteifungsteile 17a gedrückt, so daß er in der jeweils gewählten Position fixiert ist.

Die Führungsnut 61a im Führungskörper 55a ist im wesentlichen T-förmig, da der Führungskörper 55a sowohl die beiden Führungsstücke 52a und 53a als auch etwas das obere Versteifungsteil 17a umgreift.

Zum Halter 23a gehört eine Bodenplatte 62a mit Durchtrittsöffnungen 63a für die Krampen 8. Da vorzugsweise auf jeder Seite des Verbindungselementes 3 bzw. 4 zwei Krampen 8 vorgesehen sind, durchgreifen die Krampen 8 jeweils paarweise die Durchtrittsöffnungen 63a. Fluchtend mit den Durchtrittsöffnungen 63a befinden sich Längsnuten 64a außen in dem Halter 23a und dienen einerseits zur teilweisen Aufnahme der Krampen 8 vor dem Herstellen der Verbindung und andererseits zur Führung des Druckstückes 21a.

Das Druckstück 21a besteht aus einem oberen, eine Schlagfläche 65a für den Hammer aufweisenden Kopfstück 66a und mindestens einem, vorzugsweise jedoch zwei damit verbundenen, gabelförmig angeordneten Druckfingern 67a. Die Lage und der Querschnitt sowie die Länge der beiden in Fig. 5 hintereinander angeordneten Druckfinger 67a sowie deren Länge sind an die Lage und den Querschnitt und die Länge der Längsnuten 64a angepaßt. Das Druckstück 21a ist daher mit seinen Druckfingern 67a längs der Längsnuten 64a verschiebbar und kann mit seinen freien Enden 68a auf die Krampen 8 bzw. deren Stege 36 aufgesetzt werden.

Das Unterwerkzeug 13a besteht aus einem plattenförmigen Halter 34a für das bzw. die unteren Verbindungselemente 4. Der Halter 34a ist eine Grundplatte und starr mit dem Werkzeugträger 14a bzw. dessen unteren Versteifungsteilen 18a verbunden.

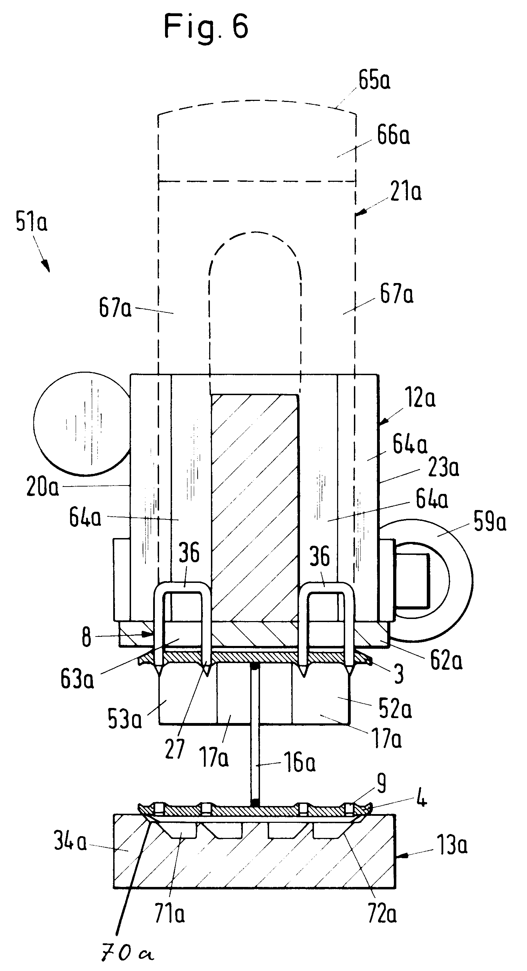

Der Halter 34a weist eine Ausnehmung 70a zur Aufnahme des bzw. der Verbindungselemente 4 auf. Zu der Ausnehmung 70a gehören ferner sich quer zur Längsrichtung der länglichen Verbindungselemente 4 erstreckende Kanäle 71a mit schräg stehenden Begrenzungswänden 72a jeweils unmittelbar unter den Durchtrittsöffnungen 9 in den Verbindungselementen 4. Die schräg stehenden Begrenzungswände 72a bewirken, daß die freien Enden 27 der Krampen 8 in eine horizontale Lage umgelenkt werden, wenn sie auf diese Begrenzungswände 72a auftreffen (Fig. 6).

Während bei dem zuerst beschriebenen Ausführungsbeispiel die Krampen 8 von unten nach oben durch die Förderbandenden 1 und 2 getrieben werden, werden sie mit den zugehörigen Verbindungselementen 3 bei der Vorrichtung 51a in den zum Oberwerkzeug 12a gehörenden Halter 23a eingesetzt und sodann von oben nach unten durch die in den Figuren nicht dargestellten Förderbandenden schrittweise gedrückt. Dies geschieht durch Hammerschläge auf das Druckstück 21a, wobei die freien Enden 68a von dessen Druckfingern 67a die Wirkung der Hammerschläge auf die Stege 36 der Krampen 8 weiterleiten.

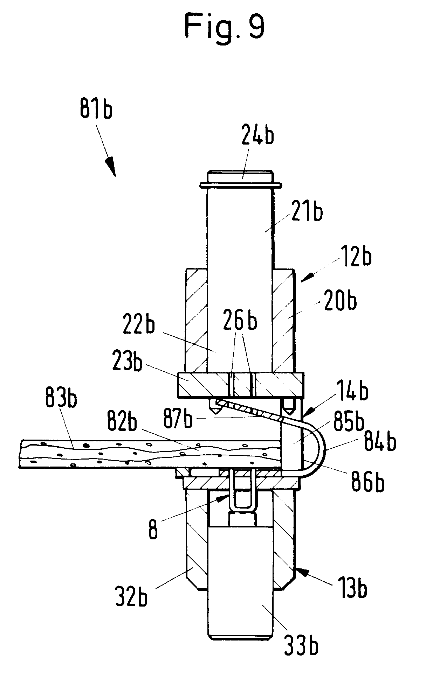

Bei der in Fig. 9 dargestellten Ausführungsform handelt es sich um eine gegenüber der zuerst beschriebenen Vorrichtung 11 insofern abgewandelte Vorrichtung 81b, als sie sich dazu eignet, am freien Ende 82b eines Förderbandes 83b ein U-förmiges Verbindungselement 84b mit Hilfe von Krampen 8 zu befestigen.

Sie umfaßt einen Werkzeugträger 14b mit Durchtrittsöffnungen 85b aufweisenden Anschlagteilen 86b. Die Durchtrittsöffnungen 85b sind erforderlich für den Steg bzw. Ösenteil des Verbindungselementes 84b.

Ferner verbinden die Anschlagteile 86b ein Oberwerkzeug 12b und ein Unterwerkzeug 13b, deren Einzelteile und Funktion sowie Wirkungsweise vollständig mit denen der Vorrichtung 11 gemäß den Figuren 1 bis 4 übereinstimmen. So weist das Oberwerkzeug 12b eine Führungseinrichtung 20b in Gestalt einer Führungsbuchse für ein Druckstück 21b auf, das an seinem förderbandseitigen Ende 22b einen verschiebbaren Halter 23b trägt. Dieser Halter 23b weist Durchtrittsöffnungen 26b und nicht dargestellte Schlitze auf, mit denen er an den Anschlagteilen 86b geführt ist.

Das Unterwerkzeug 13b besteht aus einer unteren Führungseinrichtung 32b und einem unteren Druckstück 33b und weiteren Teilen wie bei der Vorrichtung 11.

Das Eintreiben der von unten nach oben bewegbaren Krampen 8 erfolgt wiederum durch Hammerschläge auf das freie Ende 24b des oberen Druckstückes 21b, wozu allerdings zunächst auch der etwas aufgebogene Schenkel 87b des Verbindungselementes 84b auf das freie Ende 82b des Förderbandes 83b gedrückt werden muß.

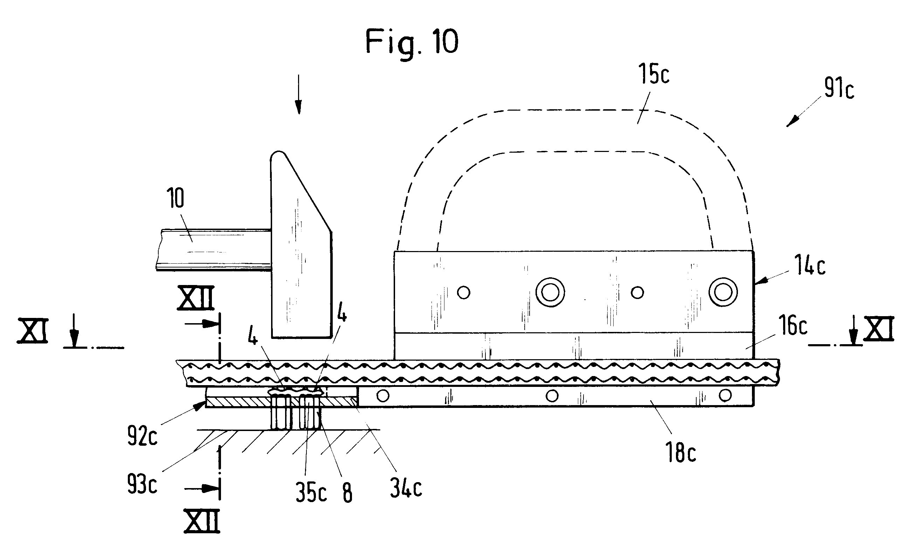

Die Figuren 10, 11 und 12 zeigen als weitere, abgewandelte Ausführungsform eine Vorrichtung 91c, die lediglich aus einem Werkzeugträger 14c mit einem Handgriff 15c und einem sich horizontal erstreckenden, stehenden Steg 16c wie bei den anderen Ausführungsformen und einem stark vereinfachten Unterwerkzeug 92c besteht. Das mit dem Steg 16c verbundene, untere Verstärkungsteil 18c trägt an seinem einen Ende 19c das Unterwerkzeug 92c. Dieses Unterwerkzeug 92c besteht aus einem plattenförmigen Halter 34c mit Durchtrittsöffnungen 35c für jeweils vollständig und paarweise hindurchtretende Krampen 8. Leisten 40c dienen ebenso wie bei dem Unterwerkzeug 13 der Vorrichtung 1 zur Fixierung der unteren Verbindungselemente 4.

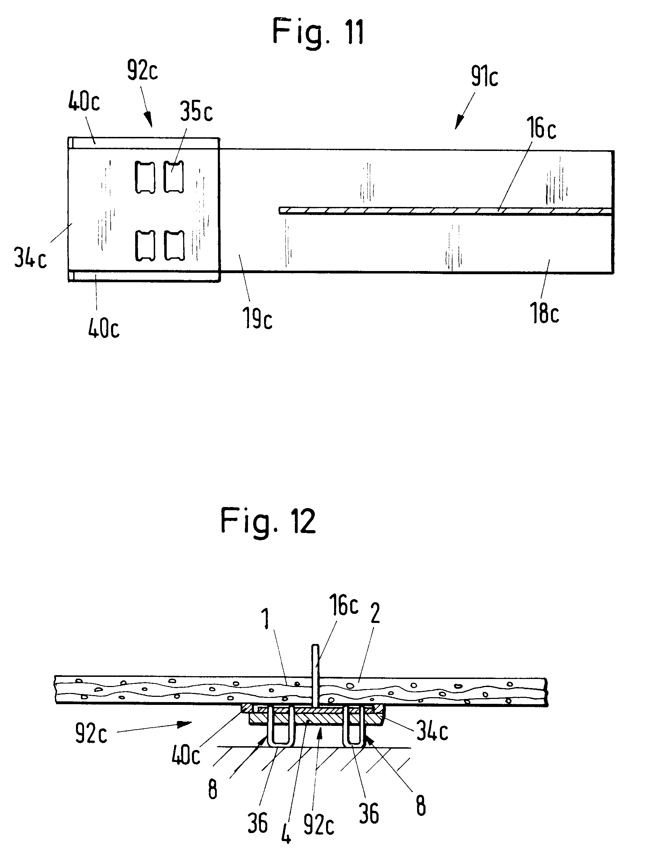

Wie aus einem Vergleich der Figuren 10 und 12 hervorgeht, werden die Krampen 8 von unten nach oben durch die zu verbindenden Förderbandenden 1 und 2 getrieben. Dabei stützen sich die Krampen 8 mit ihren Stegen 36 unmittelbar am Boden oder auf einer Unterlage 93c ab und werden von den Öffnungen 35c in dem plattenförmigen Halter 34c lediglich gehalten und geführt. Zum Eintreiben der Krampen 8 werden die Förderbandenden 1 und 2 auf die Spitzen 30 der Krampen 8 gedrückt bzw. mit Hammerschlägen schrittweise auf die freien Enden 27 der Schenkel 28 der Krampen 8 bewegt. Während sich das Unterwerkzeug 92c zunächst gemäß Fig. 10 im Abstand über der Unterlage 93c befindet, nähert es sich beim Eintreiben der Krampen 8 mehr und mehr der Unterlage 93c und kommt dort schließlich zur Auflage. Wenn diese Situation erreicht ist, kann die Vorrichtung 91c entfernt werden und es können die weiteren Schritte zum Verbinden der Förderbandenden 1 und 2 unmittelbar durchgeführt werden.

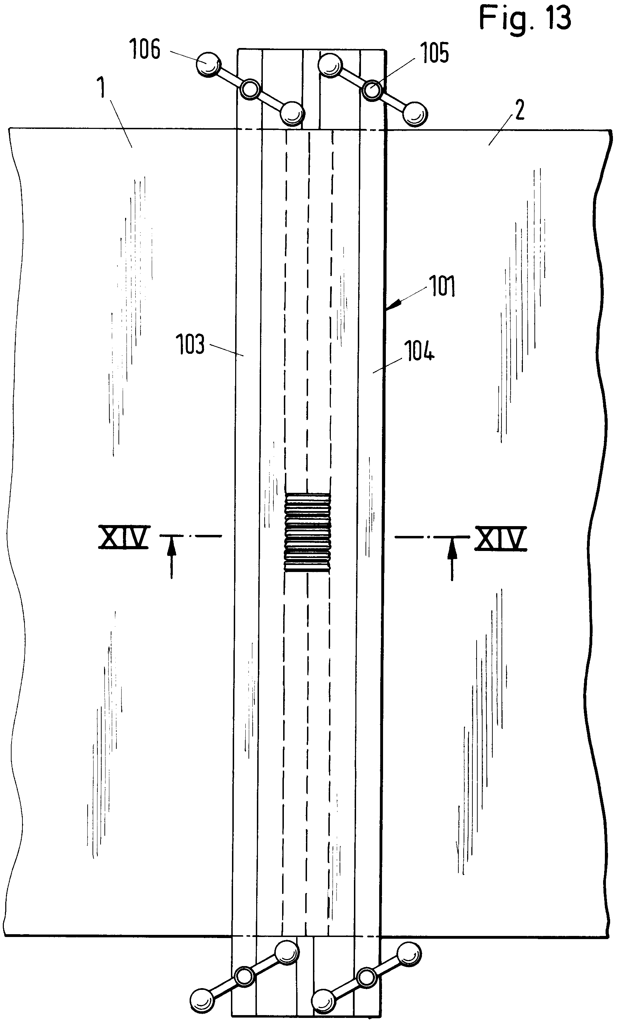

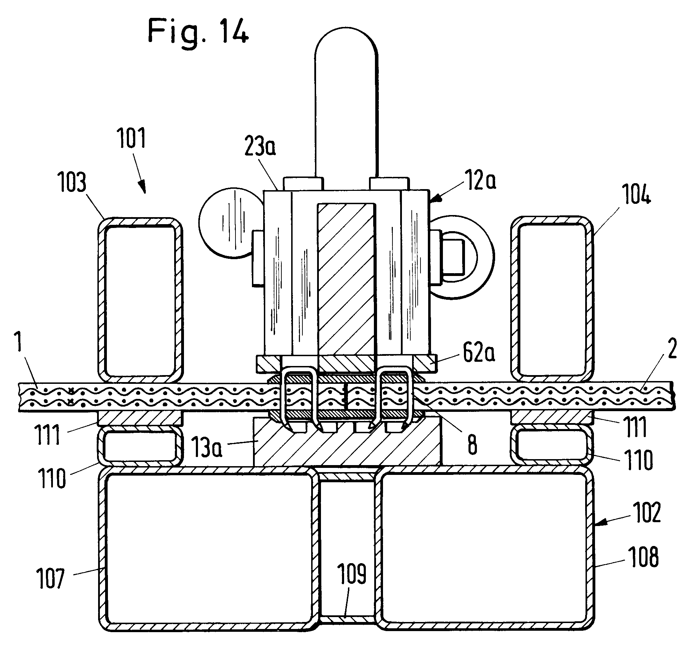

Die Figuren 13 bis 15 zeigen schließlich noch eine Zusatzeinrichtung 101 mit eingespannten Förderbandenden 1 und 2. Die Zusatzeinrichtung 101 dient zum Fixieren der beiden Förderbandenden 1 und 2 während der Verbindungsarbeiten.

Die Zusatzeinrichtung 101 umfaßt einen, unter den zu verbindenden Förderbandenden 1 und 2 anzuordnenden Spannbalken 102 und jeweils mindestens einen über jedem Förderbandende 1 und 2 anzuordnenden Spannbalken 103 bzw. 104. Die Förderbandenden 1 und 2 werden zwischen dem unteren Spannbalken 102 und den beiden oberen Spannbalken 103 und 104 fest eingespannt, wozu Gewindebolzen 105 dienen. Diese Gewindebolzen 105 sind vorzugsweise an ihren freien Enden mit Handgriffen 106 versehen, so daß die Gewindebolzen 105 in ausreichendem Maße festgezogen werden können.

Sowohl der untere Spannbalken 102 als auch die beiden oberen Spannbalken 103 und 104 besitzen vorzugsweise einen kastenförmigen Querschnitt.

Der untere Spannbalken 102 besteht vorzugsweise aus zwei, langen kastenförmigen Elementen 107 und 108, die über streifenförmige Zwischenbleche 109 miteinander verbunden sind.

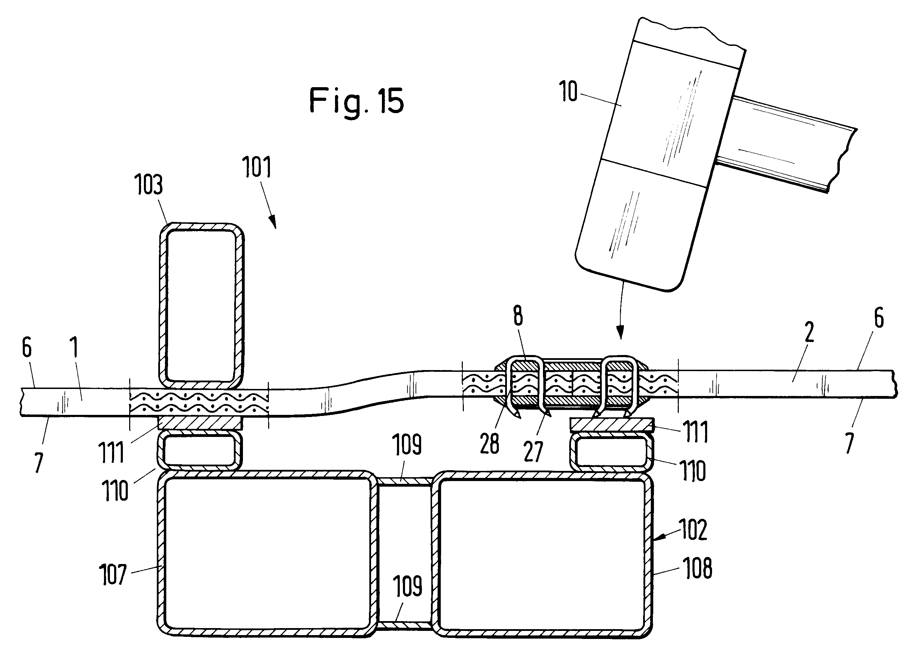

Ferner trägt der untere Spannbalken 102 im Bereich der jeweiligen Auflagestellen zusätzlich ein im Querschnitt kastenförmiges Distanzstück 110 und eine streifenförmige Auflage 111. Sie dient gemäß der Darstellung links in Fig. 15 nicht nur zur unmittelbaren Anlage an der unteren Seite 7 der Förderbandenden 1 und 2, sondern gemäß der Darstellung rechts in Fig. 15 auch als Unterlage beim Umschlagen der freien Enden 27 der Schenkel 28 der Krampen 8.

Sowohl die Spannbalken 103 und 104 als auch die länglichen, kastenförmigen Elemente 107 und 108 sowie die Distanzstücke 110 sind im wesentlichen Rohrprofile mit rechteckigem Querschnitt.

**Patentansprüche**

1. Verfahren zum Verbinden von Förderbandenden und zum Reparieren von Rissen in Förderbändern mit Hilfe von plattenförmigen bzw. länglichen Verbindungselementen (3, 4), die Durchtrittsöffnungen (9) für Befestigungselemente aufweisen, dadurch gekennzeichnet,
   a) daß zunächst die Verbindungselemente (3, 4) mit eingesetzten Krampen (8) an der einen, ersten Seite der Förderbandenden (1, 2) bzw. des Förderbandes sowie die stumpf aneinanderstoßenden Förderbandenden (1, 2) und/oder den Riß im Förderband übergreifend angeordnet werden,
   b) daß die Förderbandenden (1, 2) und/oder das Förderband sodann derart auf die Spitzen (30) der Krampen (8) und/oder die Krampen (8) mit ihren Spitzen (30) derart auf die Förderbandenden (1, 2)/das Förderband gedrückt werden, daß die Krampen (8) schrittweise durch die Verbindungselemente (3, 4) auf der ersten Seite und durch die Förderbandenden (1, 2) bzw. durch das Förderband hindurchtreten,
   c) daß die Krampen (8) daraufhin mit ihren Spitzen (30) und den freien Enden (27) ihrer Schenkel (28) in mit fluchtenden Durchtrittsöffnungen (9) versehene Verbindungselemente (3, 4) auf der zweiten Seite der Förderbandenden (1, 2)/des Förderbandes getrieben werden und
   d) daß die Krampen (8) sodann vollständig durch die Förderbandenden (1, 2)/durch das Förderband und die Verbindungselemente (3, 4) getrieben und
   e) schließlich umgelegt bzw. umgebogen werden.

2. Verfahren nach Anspruch 1, dadurch gekennzeichnet, daß die Verbindungselemente (3, 4) mit den Krampen (8) derart angeordnet werden, daß die Spitzen (30) der Krampen (8) nach oben weisen und sodann von unten nach oben durch die Förderbandenden (1, 2) bzw. durch das Förderband getrieben werden.

3. Verfahren nach einem oder mehreren der vorhergehenden Ansprüche, dadurch gekennzeichnet, daß die Krampen (8) mit Hilfe von mittelbar oder unmittelbar auf die obere Seite (6) der Förderbandenden (1, 2)/des Förderbandes gerichteten Hammerschlägen durch die Verbindungselemente (3, 4) und durch die Förderbandenden (1, 2) bzw. durch das Förderband getrieben werden.

4. Verfahren nach einem oder mehreren der vorhergehenden Ansprüche, dadurch gekennzeichnet, daß die Herstellung der Verbindung auf einer ebenen, widerstandsfähigen Unterlage erfolgt, wobei die Hammerschläge auf ein oberhalb der Förderbandenden (1, 2)/des Förderbandes befindliches Oberwerkzeug (12, 12b) durchgeführt werden, wodurch die Krampen (8) mit Hilfe eines sich auf einer Unterlage abstützenden Druckstückes (33, 33b) durch die Förderbandenden (1, 2)/durch das Förderband getrieben werden.

5. Vorrichtung zur Durchführung des Verfahrens nach einem oder mehreren der vorhergehenden Ansprüche, gekennzeichnet durch ein Oberwerkzeug (12, 12a, 12b) und ein Unterwerkzeug (13, 13a, 13b), die an einem Werkzeugträger (14, 14a, 14b) fluchtend sowie frei vorstehend/auskragend angeordnet sind.

6. Vorrichtung nach Anspruch 5, dadurch gekennzeichnet, daß das Oberwerkzeug (12, 12a, 12b) zum Positionieren von mindestens einem oberen Verbindungselement (3) dient und daß das Unterwerkzeug (13, 13a, 13b) zum Positionieren von mindestens einem unteren Verbindungselement (4) dient, und daß das Oberwerkzeug (12, 12a, 12b) und das Unterwerkzeug (13, 13a, 13b) zum Eintreiben der Krampen (8) aufgrund von Hammerschlägen vorgesehen sind.

7. Vorrichtung nach Anspruch 5 und 6, dadurch gekennzeichnet, daß das Oberwerkzeug (12, 12a, 12b) einen Halter (23, 23a, 23b) für mindestens ein Verbindungselement (3) und ein in Eintreibrichtung der Krampen (8) verschiebbar geführtes Druckstück (21, 21a, 21b) umfaßt und daß das Unterwerkzeug (13, 13a, 13b) ebenfalls einen Halter (34, 34a, 34b) für mindestens ein Verbindungselement (4) aufweist.

8. Vorrichtung nach einem oder mehreren der vorhergehenden Ansprüche, dadurch gekennzeichnet, daß zusätzlich ein unteres Druckstück (33, 33b) vorgesehen ist und lose die einzutreibenden Krampen (8) beaufschlagt und relativ zu dem Werkzeughalter (14, 14b) verschiebbar und zu dem Oberwerkzeug (12, 12b) bzw. zu dem zu diesem gehörenden Druckstück (21, 21b) axial fluchtend verschiebbar ist.

9. Vorrichtung nach einem oder mehreren der vorhergehenden Ansprüche, dadurch gekennzeichnet, daß das Oberwerkzeug (12, 12a, 12b) eine Führungseinrichtung (20, 20a, 20b) für das Druckstück (21, 21a, 21b) und eine Einrichtung (31, 31a) zum Arretieren des Druckstückes (21, 21a, 21b) aufweist.

10. Vorrichtung nach einem oder mehreren der vorhergehenden Ansprüche, dadurch gekennzeichnet, daß das Oberwerkzeug (12a) einen in Eintreibrichtung der Krampen (8) verstellbaren und arretierbaren Halter (23a) für die Verbindungselemente (3) aufweist, der zugleich als Führung für das obere Druckstück (21a) dient.

11. Vorrichtung nach einem oder mehreren der vorhergehenden Ansprüche, dadurch gekennzeichnet, daß der verstellbare Halter (23a) eine Bodenplatte (62a) mit Durchtrittsöffnungen (63a) für von unten einsetzbare, an einem Verbindungselement (3) angeordnete Krampen (8) aufweist.

12. Vorrichtung nach einem oder mehreren der vorhergehenden Ansprüche, dadurch gekennzeichnet, daß der verstellbare Halter (23a) an seinem werkzeugträgerseitigen Ende eine etwa T-förmige Führungsnut (61a) und auf seinen beiden Seiten mit den Durchtrittsöffnungen (63a) für die Krampen (8) in der Bodenplatte (62a) fluchtende Führungsnuten (64a) für Druckfinger (67a) eines U-förmigen Druckstückes (61a) aufweist.

13. Vorrichtung nach einem oder mehreren der vorhergehenden Ansprüche, dadurch gekennzeichnet, daß ein aus Anschlagteilen (86b) mit Durchtrittsöffnungen (85b) bestehender Werkzeugträger (14b) das Oberwerkzeug (12b) mit dem Unterwerkzeug (13b) verbindet.

14. Vorrichtung nach einem oder mehreren der vorhergehenden Ansprüche, dadurch gekennzeichnet, daß eine Zusatzeinrichtung (101) vorgesehen ist, die aus mindestens einem unteren Spannbalken (102) und oberen Spannbalken (103 und 104) besteht, und daß die Förderbandenden (1, 2) mit Hilfe der oberen Spannbalken (103 und 104) sowie mit Hilfe von Gewindebolzen (105) an dem unteren Spannbalken (102) arretierbar sind.

Fig.1

# Fig. 2

## Fig. 3

## Fig. 4

Fig.5

# Fig. 6

Fig.7

Fig.8

# Fig. 9

# Fig. 10

EP 0 483 637 A2

## Fig. 11

92c

40c

35c

91c

16c

34c

40c

19c

18c

## Fig. 12

1

16c

2

92c

40c

34c

8

36

4

92c

36

8

Fig. 13

EP 0 483 637 A2

# Fig. 14

Fig. 15

EP 0 483 637 A2